# EUROPEAN PATENT APPLICATION

(11) **EP 4 749 893 A1**
(43) Date of publication of application: **27.05.2026**
(21) Application number: 25216871.1
(22) Date of filing: 19.11.2025
(51) Int. Cl.: H02K 15/122, H02K 3/38, H02K 15/30

(54) **METHOD OF MANUFACTURING STATOR**

(30) Priority: 21.11.2024 JP 2024203289
(71) Applicant: Toyota Jidosha Kabushiki Kaisha, Toyota-shi, Aichi-ken 471-8571 (JP)
(72) Inventor: OHIRA, Kengo, Toyota-shi, 471-8571 (JP); USAMI, Kazuaki, Toyota-shi, 471-8571 (JP); OHTA, Kei, Toyota-shi, 471-8571 (JP); YAMATO, Fumiaki, Toyota-shi, 471-8571 (JP); ASAOKA, Hironori, Toyota-shi, 471-8571 (JP); SUZUKI, Yasunori, Toyota-shi, 471-8571 (JP); MANABE, Hideki, Toyota-shi, 471-8571 (JP)
(74) Representative: TBK

(57) **Abstract**

A method of manufacturing a stator (100) includes preparing a workpiece (90). The workpiece (90) includes a coil (30) to which a plurality of wire rods (60) is connected, and a stator core (20) having a cylindrical shape. The coil (30) is wound around the stator core (20). The coil (30) includes a coil end (30a, 30b) protruding from an end portion of the stator core (20). The manufacturing method includes applying a first resin (92) to the coil end (30a, 30b), temporarily curing the first resin (92) applied to the coil end (30a, 30b), applying an insulating second resin (64) to a connection portion between the wire rods (60), and heating the workpiece (90) to cure the first resin (92) and the second resin (64).

## Description

### BACKGROUND OF THE INVENTION

### 1. Field of the Invention

The technique disclosed in the present specification relates to a method of manufacturing a stator.

### 2. Description of Related Art

In a method of manufacturing a stator disclosed in Japanese Unexamined Patent Application Publication No. 2017-200356 (JP 2017-200356 A), resin (specifically, varnish) is applied to coil ends, and then the resin is cured by heating. By coating coil ends with resin as described above, noise and vibration performance of a stator can be improved.

### SUMMARY OF THE INVENTION

According to the method of manufacturing a stator in JP 2017-200356 A, resin is cured after the resin is applied to coil ends. Furthermore, in the case of a stator, an insulating resin may be provided to cover connection portions between wire rods constituting a coil. In this case, a stator can be efficiently manufactured by applying resin to the coil end, then applying an insulating resin to connection portions, and then collectively curing the resin of the coil ends and the insulating resin together by heating. However, in this case, it takes a long time from the step of applying the resin to the coil ends until the step of curing, which may cause the resin to drip from the coil ends. If the resin drips from the coil ends, a step of removing the dripped resin is needed, which lowers the manufacturing efficiency of stators. The present disclosure provides a technique for efficiently manufacturing a stator while restraining dripping of resin from coil ends in a process of manufacturing a stator in which coil ends are covered with resin and connection portions of the wire rods are covered with an insulating resin.

According to an aspect of the present disclosure, a method of manufacturing a stator includes preparing a workpiece. The workpiece has a coil to which a plurality of wire rods is connected, and a stator core having a cylindrical shape. The coil is wound around the stator core. The coil has a coil end protruding from an end portion of the stator core. The manufacturing method includes applying a first resin to the coil end, temporarily curing the first resin applied to the coil end, applying an insulating second resin to a connection portion between the wire rods, and heating the workpiece to cure the first resin and the second resin.

In the present manufacturing method, the first resin is applied to the coil end, and the applied first resin is temporarily cured. Therefore, it is possible to restrain the first resin from dripping from the coil end after that. After the first resin is temporarily cured, an insulating second resin is applied to the connection portion between the wire rods. Thereafter, the workpiece is heated to cure the first resin and the second resin. Since the first resin and the second resin can be cured in a lump, the stator can be efficiently manufactured. As described above, according to the present manufacturing method, it is possible to efficiently manufacture the stator while restraining the first resin from dripping from the coil end.

When the first resin is temporarily cured, the first resin may be irradiated with ultraviolet rays.

According to this configuration, the first resin can be easily temporarily cured.

The first resin may be applied to the coil end in a state where the workpiece is placed such that the coil end is located above the stator core.

When the first resin is temporarily cured, the first resin applied to the coil end may be irradiated with ultraviolet rays while the first resin is being applied to the coil end.

According to this configuration, the first resin can be temporarily cured immediately after the first resin is applied to the coil end, so that it is possible to effectively restrain dripping of the first resin.

When the first resin is temporarily cured, ultraviolet rays may be irradiated onto a portion of the coil end that is below the center of the coil end in an up-down direction.

According to this configuration, it is possible to effectively restrain dripping of the first resin onto the stator core.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a perspective view of a stator 100;
FIG. 2 is an enlarged perspective view of an upper part of the stator 100;
FIG. 3 is a plan view of an inner circumferential surface of the stator 100;
FIG. 4 is a plan view of a segment coil 60;
FIG. 5 is a flowchart showing a method of manufacturing the stator 100;
FIG. 6 is an explanatory diagram of a varnish coating step for a coil end 30b;
FIG. 7 is an explanatory diagram of an irradiation position of ultraviolet rays UV; and
FIG. 8 is an explanatory diagram of a varnish coating step for a coil end 30a.

### DETAILED DESCRIPTION OF EMBODIMENTS

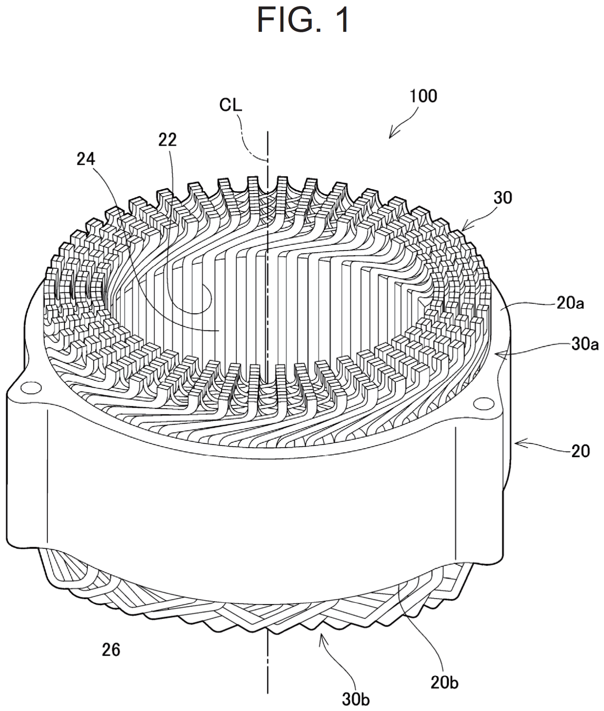

A stator 100 shown in FIG. 1 includes a stator core 20 and a coil 30. The stator core 20 has a substantially cylindrical shape centered on a central axis CL. The coil 30 is wound around the stator core 20.

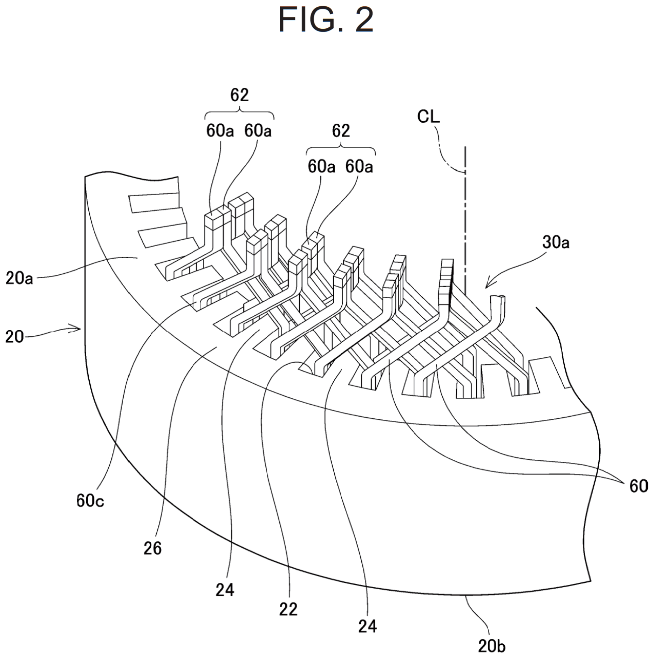

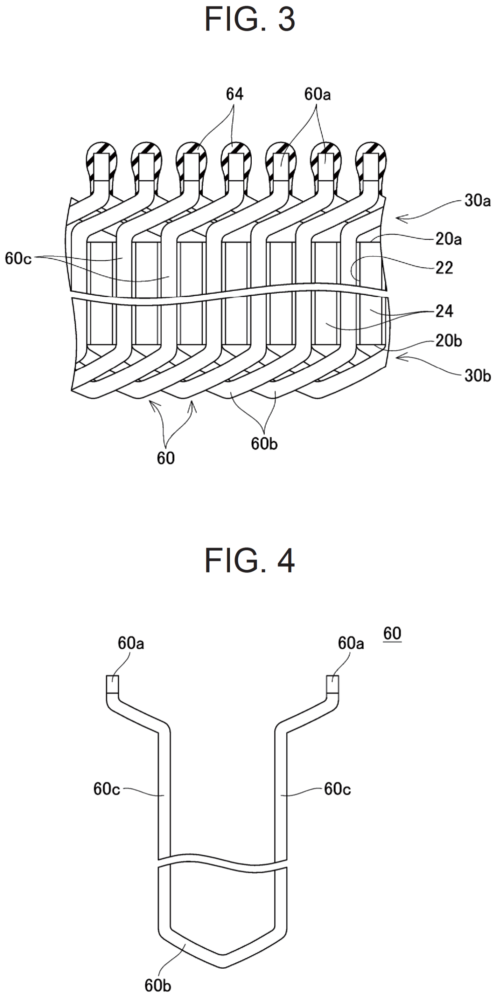

The stator core 20 is formed of a magnetic material. The stator core 20 has an end face 20a and an end face 20b on both sides in an axial direction. As shown in FIG. 2, the stator core 20 has a back yoke 26 and a plurality of teeth 24. The back yoke 26 has a cylindrical shape centered on the central axis CL. Each tooth 24 has a convex shape that protrudes from the inner circumferential surface of the back yoke 26 toward the central axis CL. The teeth 24 are arranged to be spaced apart from one another in a circumferential direction of the stator core 20. As shown in FIG. 3, each tooth 24 extends from the end face 20a to the end face 20b along the axial direction. A slot 22 is provided between the respective teeth 24.

The coil 30 is configured by connecting a plurality of segment coils 60 shown in FIG. 4. The segment coil 60 is a substantially U-shaped wire rod. The segment coil 60 has a bent portion 60b, two straight portions 60c, and two end portions 60a. The bent portion 60b is a portion where a conducting wire is bent into a U-shape. Each straight portion 60c is a portion where the conducting wire extends linearly from the bent portion 60b. The two straight portions 60c extend in parallel to each other. The conducting wire is bent diagonally outward at an end portion of each straight portion 60c on the opposite side to the bent portion 60b, and the end portion 60a is provided at the tip of the diagonally extending portion. The conducting wire constituting the segment coil 60 is covered with an insulating coating. However, no insulating coating is provided at each end portion 60a, and the conducting wire is exposed.

The segment coils 60 are attached to the stator core 20 as shown in FIG. 3. In other words, each straight portion 60c of each segment coil 60 is arranged in a slot 22. As shown in FIG. 2, a plurality of straight portions 60c is stacked in a radial direction of the stator core 20 in each slot 22. As shown in FIG. 3, each end portion 60a of each segment coil 60 is arranged so as to protrude from the end face 20a of the stator core 20. The bent portion 60b of each segment coil 60 is arranged so as to protrude from the end face 20b of the stator core 20.

As shown in FIG. 2, the end portion 60a of the segment coil 60 is arranged so as to be adjacent to the end portion 60a of another segment coil 60. A large number of pairs 62 of the end portions 60a are formed on the end face 20a of the stator core 20. The two end portions 60a constituting the pair 62 are welded to each other. Hereinafter, the pair 62 (i.e., the two end portions 60a welded to each other) is referred to as a welded portion 62. The coil 30 is configured by welding the segment coils 60 to each other as described above. As shown in FIG. 3, each welded portion 62 is covered with a thick insulating resin 64. The insulating resin 64 is made of, for example, an insulating powder paint. Note that illustration of the insulating resin 64 is omitted from figures other than FIG. 3.

As shown in FIGS. 1 to 3, a coil end 30a is formed by portions of the respective segment coils 60 which protrude from the end face 20a. The coil end 30a includes a plurality of welded portions 62. Furthermore, as shown in FIG. 3, a coil end 30b is formed by portions of the respective segment coils 60 which protrude from the end face 20b. The coil end 30b includes a plurality of bent portions 60b. The coil ends 30a, 30b are coated with varnish (not shown) except for the surface of the insulating resin 64. By coating the coil ends 30a, 30b with varnish, the segment coils 60 are bound by the varnish, which makes it difficult for each segment coil 60 to vibrate. This improves noise and vibration (NV) performance of the stator core 20.

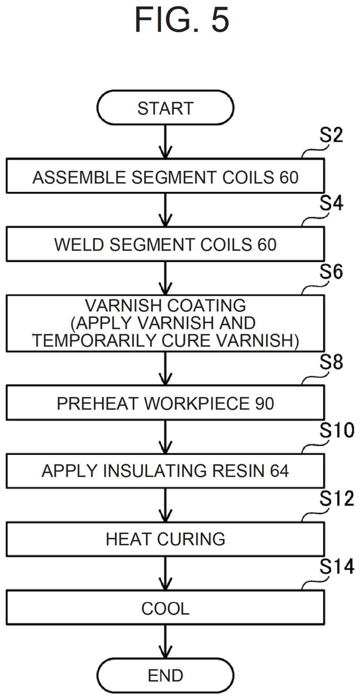

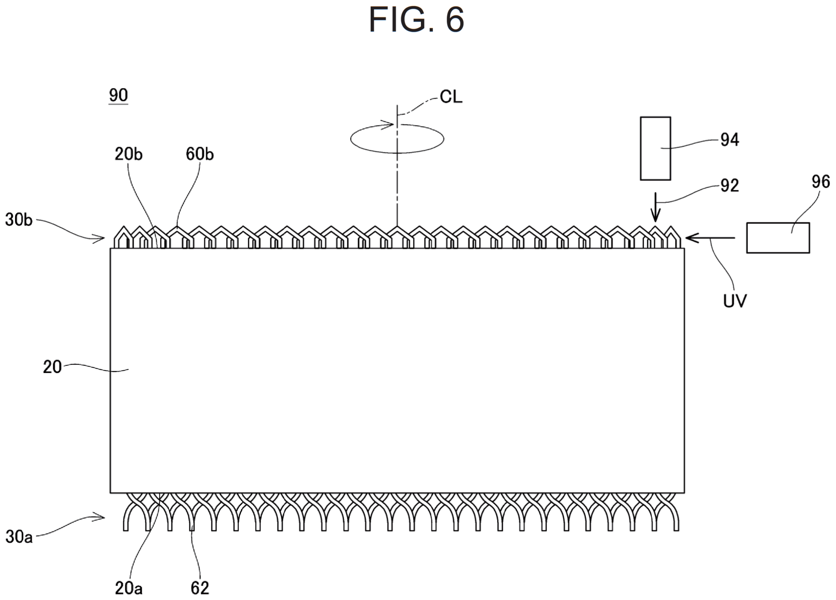

Next, a method of manufacturing the stator 100 will be described. FIG. 5 shows a manufacturing process of the stator 100. In step S2, each segment coil 60 is assembled to the stator core 20. Here, as shown in FIGS. 1 to 3, the respective segment coils 60 are assembled to the stator core 20 such that the straight portions 60c thereof are accommodated in the slots 22. In step S4, the end portions 60a of each segment coil 60 are welded together to form a welded portion 62, thereby forming the coil 30. As a result, a workpiece 90 having a structure in which the coil 30 is wound around the stator core 20 as shown in FIG. 6 is obtained. At this stage, the coil end 30a protrudes from the end face 20a of the stator core 20, and the coil end 30b protrudes from the end face 20b of the stator core 20.

Next, in step S6, varnish coating is performed on the coil ends 30a, 30b. In step S6, varnish coating is first performed on the coil end 30b, and then varnish coating is performed on the coil end 30a.

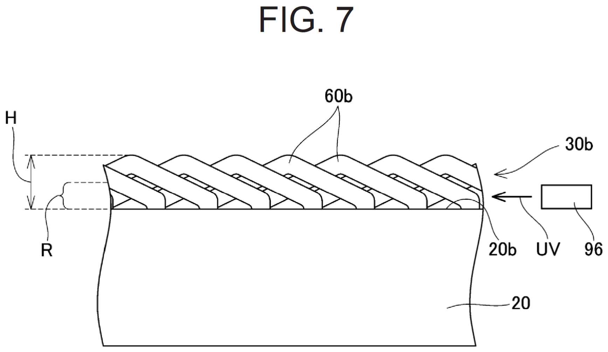

In the varnish coating on the coil end 30b, as shown in FIG. 6, the workpiece 90 is placed in such a posture that the coil end 30b faces upward, and varnish 92 is ejected from a nozzle 94 toward the coil end 30b while the workpiece 90 is rotated about the central axis CL. This allows the varnish 92 to be applied to the entire coil end 30b. The varnish 92 is made of an ultraviolet-curable resin. Since the viscosity of the varnish 92 is low, the entire surface of each segment coil 60 in the coil end 30b is coated with the varnish 92. Furthermore, in this case, the coil end 30b is irradiated with ultraviolet rays UV by an ultraviolet light 96 while the varnish 92 is applied to the coil end 30b. As a result, the varnish 92 applied to the coil end 30b is temporarily cured. Since the temporary curing eliminates the fluidity of the varnish 92, the varnish 92 is restrained from dripping from the coil end 30b to the stator core 20 and the coil end 30a. Here, as shown in FIG. 7, the ultraviolet rays UV can be irradiated such that the center of an irradiation range of the ultraviolet rays UV is located in a region R below a position of half of the height H of the coil end 30b (i.e., a region below the center in the up-down direction of the coil end 30b). As described above, by irradiating the ultraviolet rays UV mainly on the region R, it is possible to effectively restrain dripping of the varnish 92 onto the stator core 20 and the coil end 30a.

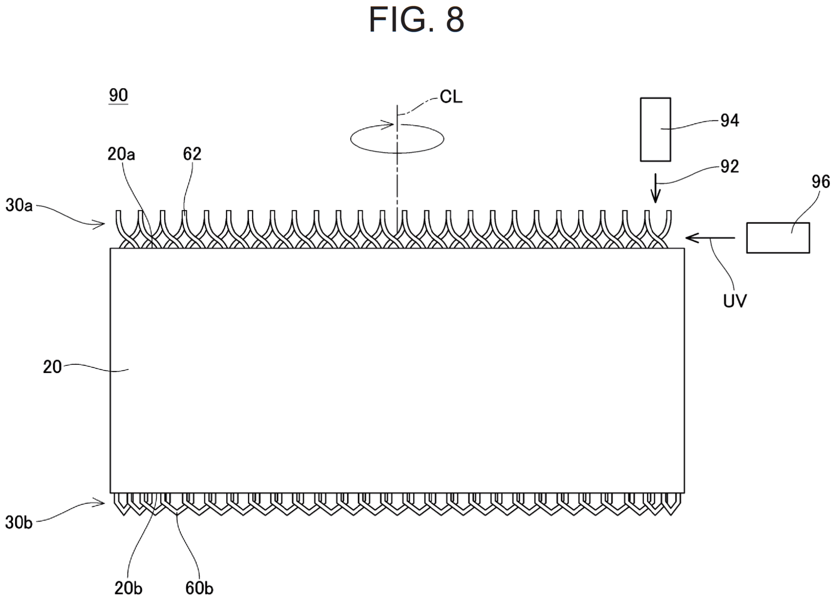

After the varnish coating on the coil end 30b is performed, the varnish coating on the coil end 30a is performed. Here, as shown in FIG. 8, the workpiece 90 is placed in such a posture that the coil end 30a faces upward, and varnish 92 is ejected from the nozzle 94 toward the coil end 30a while the workpiece 90 is rotated about the central axis CL. This allows the varnish 92 to be coated on the entire coil end 30a. Furthermore, in this case, the coil end 30a is irradiated with ultraviolet rays UV by the ultraviolet light 96 while the varnish 92 is applied to the coil end 30a, thereby temporarily curing the varnish 92. Therefore, the varnish 92 is restrained from dripping to the stator core 20 and the coil end 30b. Here, when the ultraviolet rays UV are irradiated mainly onto a region below the center of the coil end 30a in the up-down direction, it is possible to effectively restrain dripping of the varnish 92 onto the stator core 20 and the coil end 30b. Note that in the varnish coating on the coil end 30a, each welded portion 62 may be coated with the varnish 92 or may not be coated with the varnish 92.

Next, in step S8, the workpiece 90 is preheated, and in step S10, the insulating resin 64 is formed so as to cover each welded portion 62. For example, each welded portion 62 can be covered with the insulating resin 64 by dipping each welded portion 62 into the insulating resin 64 stored in a container.

Next, in step S12, the entire workpiece 90 is heated in a heating furnace to cure the varnish 92 and the insulating resin 64. Thereafter, in step S14, the workpiece 90 is cooled to room temperature, thereby completing the stator 100.

According to the above-mentioned manufacturing method, the varnish 92 is temporarily cured after being applied, so that it is possible to restrain uncured varnish 92 from dripping onto the stator core 20 and below it. This eliminates the need for a step for removing the dripping varnish 92. Furthermore, in a heat-curing step, the varnish 92 and the insulating resin 64 can be cured simultaneously. Therefore, according to this manufacturing method, the stator core 20 can be manufactured efficiently.

In the above-mentioned embodiment, the varnish 92 is temporarily cured by irradiation of ultraviolet rays, but other methods may be used to temporarily cure the varnish 92. For example, a thermosetting resin may be used as the varnish 92, and the varnish 92 may be temporarily cured by heating.

In the above-mentioned embodiment, the step of applying the varnish 92 and the step of temporarily curing the varnish 92 are performed simultaneously, but the step of temporarily curing the varnish 92 may be performed separately from the step of applying the varnish 92. In other words, the step of temporarily curing the varnish 92 may be performed after the step of applying the varnish 92 and before the step of applying the insulating resin 64. This configuration can also restrain dripping of the varnish 92. For example, by performing the step of temporarily curing the varnish 92 at an appropriate timing, it is possible to temporarily cure the varnish 92 before dripping of the varnish 92 occurs.

In the above-mentioned embodiment, both of the coil ends 30a, 30b are varnished, but only one of the coil ends 30a, 30b may be varnished.

The varnish 92 of the present embodiment is an example of the first resin, and the insulating resin 64 of the present embodiment is an example of the second resin.

Although the embodiments have been described in detail above, these are merely examples and do not limit the scope of the claims. The technique described in the claims includes various modifications and alterations to the specific examples exemplified above. The technical elements described in the present specification or drawings exhibit technical utility alone or in various combinations, and are not limited to the combinations described in the claims at the time of filing. Furthermore, the technique exemplified in the present specification or drawings achieves a plurality of objects simultaneously, and achieving one of the objects itself has technical utility.

## Claims

1. A method of manufacturing a stator (100), comprising:
preparing a workpiece (90) having a coil (30) to which a plurality of wire rods (60) is connected, and a stator core (20) having a cylindrical shape, the coil (30) being wound around the stator core (20), the coil (30) having a coil end (30a, 30b) protruding from an end portion of the stator core (20);
applying a first resin (92) to the coil end (30a, 30b);
temporarily curing the first resin (92) applied to the coil end (30a, 30b);
applying an insulating second resin (64) to a connection portion between the wire rods (60); and
heating the workpiece (90) to cure the first resin (92) and the second resin (64).

2. The method according to claim 1, wherein when the first resin (92) is temporarily cured, the first resin (92) is irradiated with ultraviolet rays.

3. The method according to claim 1, wherein the first resin (92) is applied to the coil end (30a, 30b) in a state where the workpiece is placed such that the coil end (30a, 30b) is located above the stator core (20).

4. The method according to claim 3, wherein when the first resin (92) is temporarily cured, the first resin (92) applied to the coil end (30a, 30b) is irradiated with ultraviolet rays while the first resin (92) is being applied to the coil end (30a, 30b).

5. The method according to claim 4, wherein when the first resin (92) is temporarily cured, ultraviolet rays are irradiated onto a portion of the coil end (30a, 30b) that is below a center of the coil end (30a, 30b) in an up-down direction.
